# EUROPEAN PATENT APPLICATION

(11) **EP 1 367 474 A2**
(43) Date of publication of application: **03.12.2003**
(21) Application number: 03009361.1
(22) Date of filing: 24.04.2003
(51) Int. Cl.: G05G 1/14, F02D 11/02, B60N 2/06, B60N 2/24

(54) **Seat apparatus for industrial vehicle**

(30) Priority: 29.05.2002 JP 2002155202
(71) Applicant: NISSAN MOTOR CO., LTD., Yokohama-shi Kanagawa-ken (JP)
(72) Inventor: Itou, Hideki, Nishitama-gun, Tokyo (JP)
(74) Representative: Schaeberle, Steffen

(57) **Abstract**

A seat apparatus includes a seat 1 rotatably supported on a vehicle body 3 through a rotating mechanism 5. The seat 1 has a mechanism for enabling its rotational position against the vehicle body 3 to be adjusted. In addition to an accelerator pedal 7 of the vehicle, an accelerator lever 10 is provided to allow an operator to operate a vehicle traveling unit manually.

## Description

### BACKGROUND OF THE INVENTION

### 1. Field of the invention

The present invention relates to a seat apparatus for an industrial vehicle, such as fork lift. More particularly, the invention relates to a seat apparatus which can suppress reduction of the operationality of a traveling manipulating device in case of rotating a seat for the purpose of ensuring rearward visibility at the retreat of the industrial vehicle.

### 2. Description of the Related Art

Japanese Patent Application Laid-open No. 2000-318498 discloses a conventional seat apparatus of this kind.

In this seat apparatus, for the purpose of preventing the reduction in operationality of various pedals since an operator's foot gets away from the pedals in rotating a rotatable seat in order to ensure rearward visibility with ease at a vehicle's retreating, the rotating center of the rotatable seat is positioned in front of a seat cushion. Thus, in order to facilitate an operator's manipulating of various pedals, the seat apparatus is constructed so as to reduce a movement of an operator's foot as possible even if rotating the seat at a predetermined angle.

### SUMMARY OF THE INVENTION

In the above conventional device, however, there is a limitation to enlarge the rotating angle of the seat since the device is directed to ensure an operator's operationality of the pedals despite rotation of the seat, causing a possibility that it becomes difficult for an operator to take a manipulating amount to ensure rearward visibility at a vehicle's going back.

The present invention is provided to solve the above-mentioned problem. An object of the present invention is to provide a seat apparatus for an industrial vehicle, which can take a driving posture enabling an operator to ensure an operator's backward visibility when the industrial vehicle moves back.

According to the present invention, the above-mentioned object is accomplished by a seat apparatus for an industrial vehicle, the seat apparatus comprising:
an accelerator pedal for controlling a vehicle traveling unit;
a seat rotatably supported on a vehicle body through a rotating mechanism, for controlling a rotating position of the seat in relation to the vehicle body; and
an accelerator manipulating unit arranged about the seat, for allowing an operator to operate the vehicle traveling unit manually in place of the accelerator pedal.

### BRIEF DESCRIPTION OF THE DRAWINGS

Fig. 1 is a layout view showing a seat apparatus for an industrial vehicle in accordance with the first embodiment of the present invention;
Fig. 2 is a front view of the seat apparatus of Fig. 1;
Fig. 3 is a side view of the seat apparatus of Fig. 1;
Fig. 4 is a plan view of a rotating mechanism of the seat apparatus of Fig. 1;
Fig. 5 is a sectional view of the rotating mechanism of Fig. 4;
Fig. 6 is an exploded view of the seat apparatus;
Fig. 7 is an exploded perspective view of an accelerator interlocking unit;
Fig. 8 is a front view of the accelerator interlocking unit;
Fig. 9 is a perspective view of the rotating mechanism while the seat apparatus is in neutral;
Fig. 10 is a layout view showing the relationship in position between pedals and the seat apparatus in neutral;
Fig. 11 is perspective view of the rotating mechanism when the seat apparatus is in its backward rotational position;
Fig. 12 is a layout view showing the relationship in position between the pedals and the seat apparatus in its backward rotational position;
Fig. 13 is a layout view showing the relationship in position between the pedals and the seat apparatus in its position for an operator to get on and off;
Fig. 14 is a side view showing accelerator operating means of a seat apparatus for an industrial vehicle in a modification of the invention;
Fig. 15 is a side view showing an accelerator pedal of the seat apparatus of Fig. 14; and
Fig. 16 is a circuit diagram of the seat apparatus of Figs. 14 and 15.

### DESCRIPTION OF THE PREFERRED EMBODIMENT

Referring to accompanying drawings, an embodiment of the present invention will be described below.

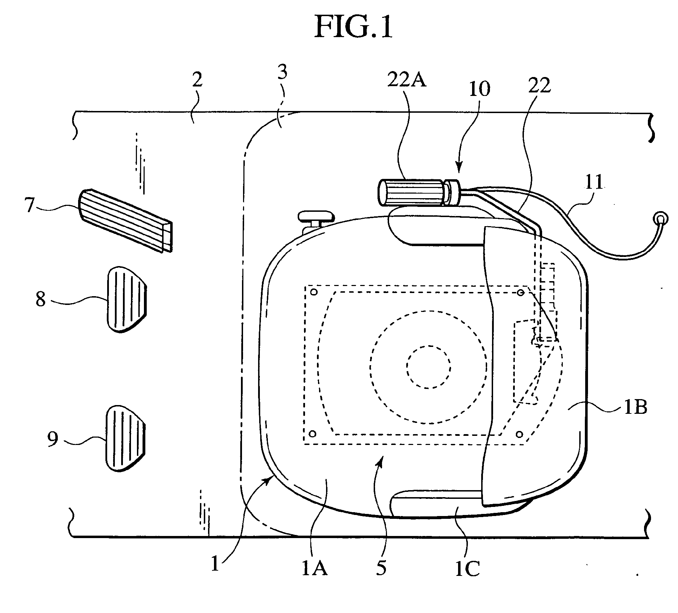

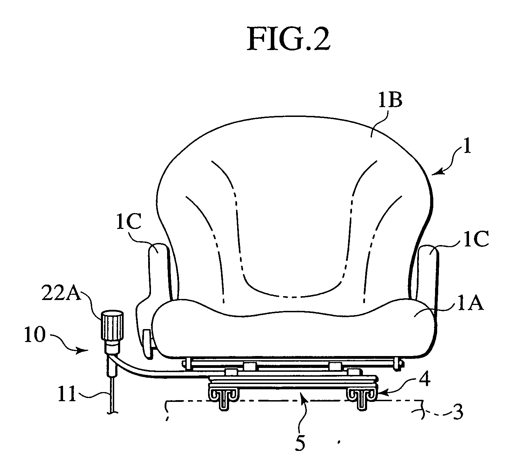

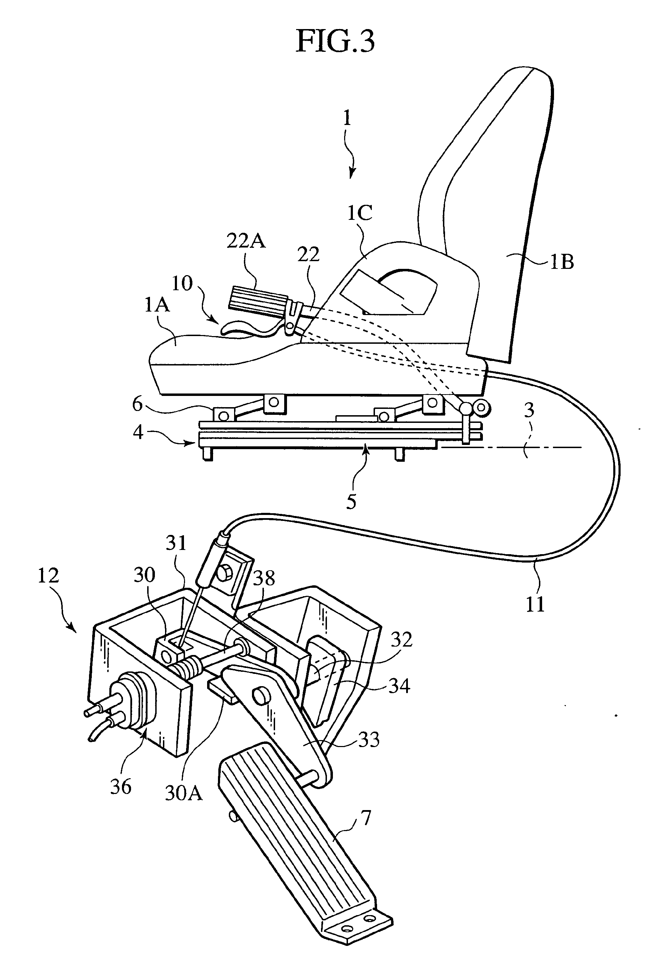

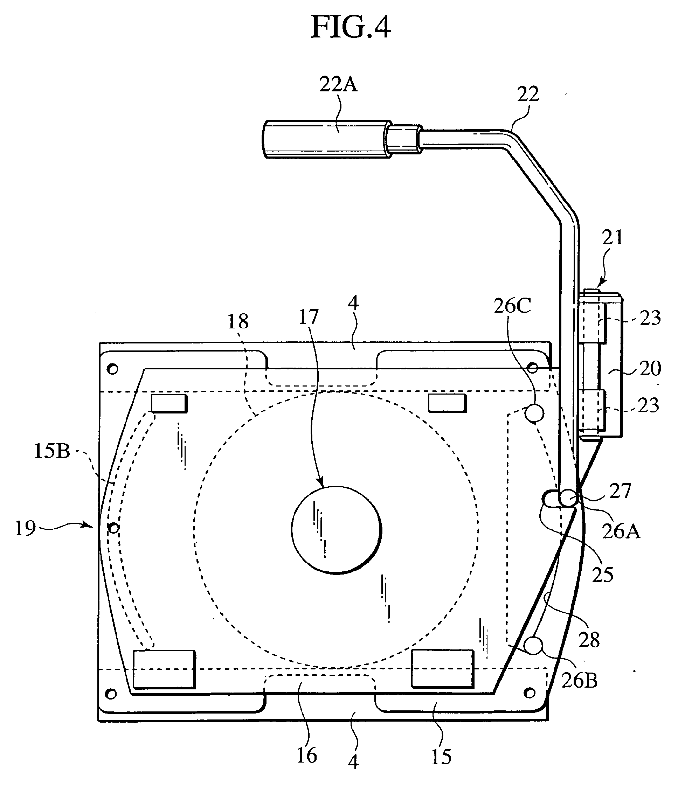

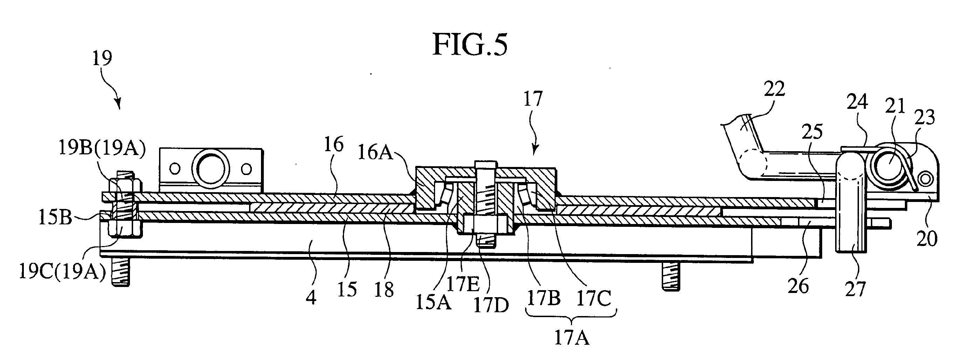

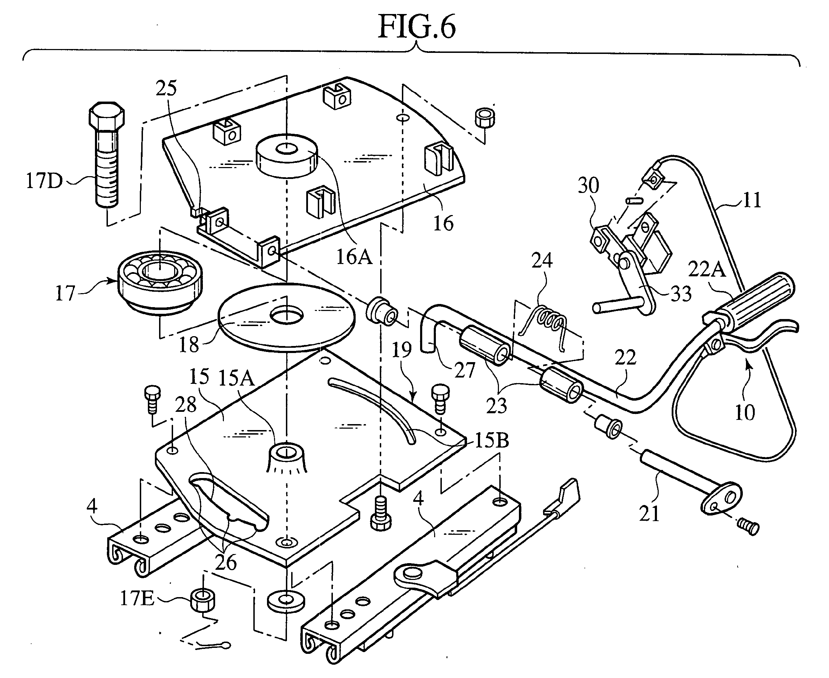

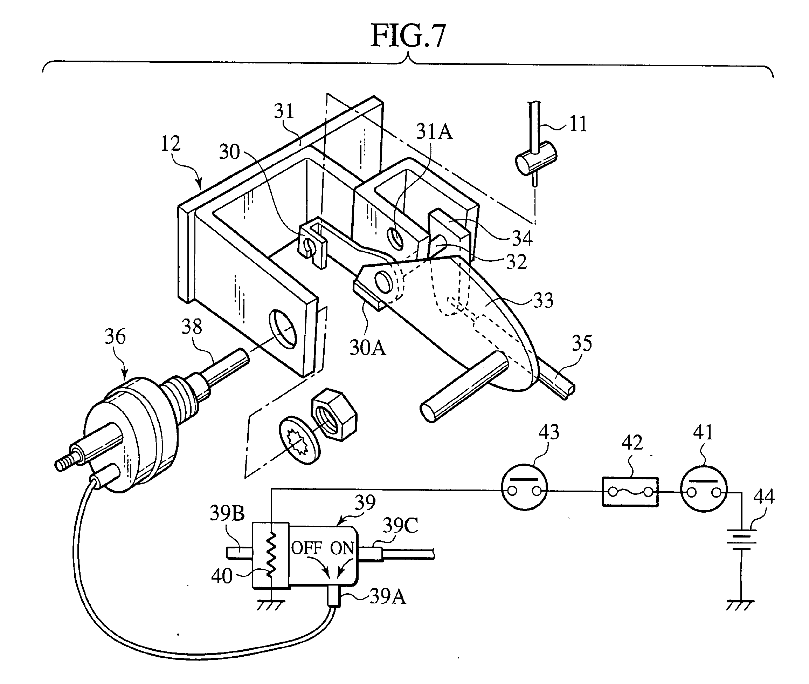

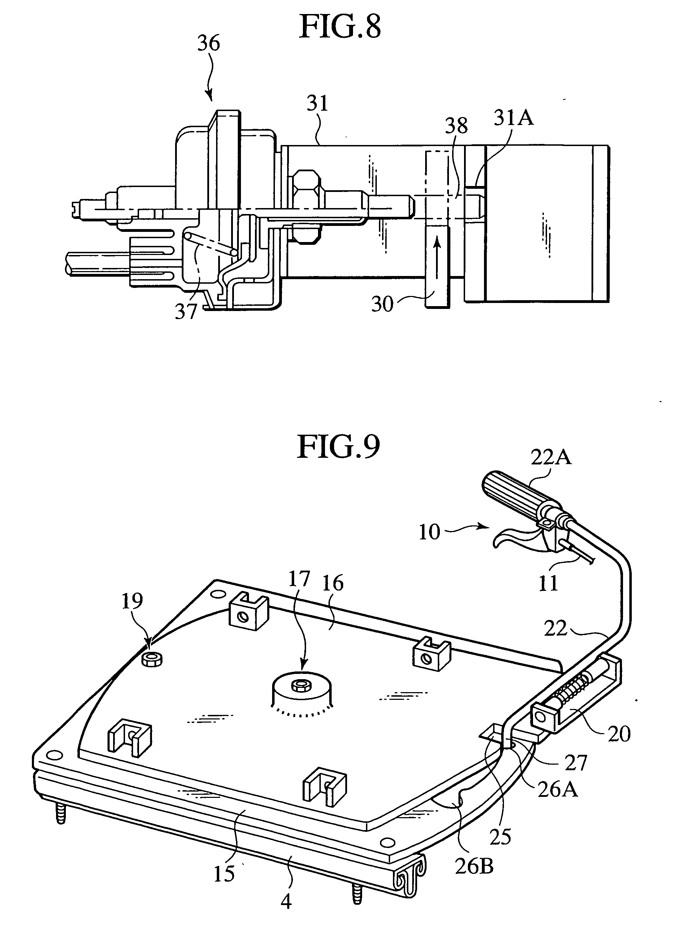

Figs. 1 to 8 show one example of a seat apparatus for an industrial vehicle on the application of the present invention. Fig. 1 is a layout view of the seat apparatus. Fig. 2 is a front view of the seat apparatus. Fig. 3 is a side view of the seat apparatus. Fig. 4 is a plan view of a rotating mechanism of the seat apparatus. Fig. 5 is a sectional view of the rotating mechanism of Fig. 4. Fig. 6 is an exploded view of the seat apparatus. Fig. 7 is an exploded perspective view of an accelerator interlocking unit. Fig. 8 is a front view of the accelerator interlocking unit.

As shown in Figs. 1 to 3, a seat 1 of a fork lift is mounted on an upper surface of a top panel 3 (engine hood) forming part of a vehicle body 2, through seat slides 4 and a rotating mechanism 5. In a variation, a suspension 6 may be interposed between the rotating mechanism 5 and the seat 1. The seat slide 5 fixes the rotating mechanism 5 and the seat 1 on the top panel 3 slidably in the fore-and-aft direction of the vehicle (fork lift). The seat 1 includes a seat cushion 1A providing a seat face, a seat back 1B and hip supports 1C for supporting an operator's hip. The seat 1 is also equipped with an accelerator lever 10 as an accelerator operating unit. The accelerator lever 10 is connected with a not-shown throttle valve of an engine (not shown) through the intermediary of an accelerator wire 11 and an accelerator interlock 12. As is well known, on a floor in front of the seat, there are generally arranged an accelerator pedal 7, a brake pedal 8 and a clutch pedal (or an inching pedal) 9, in order from the right side of the vehicle.

As shown in Figs. 4 to 6, the rotating mechanism 5 includes a base plate 15 connected with the seat slides 4, a rotating plate 16 connected with the seat 1 and a bearing mechanism 17 formed by a taper roller bearing 17A that supports the rotating plate 16 in relation to the base plate 15 rotatably. The bearing mechanism 17 interposes the taper roller bearing 17A between a boss 15A projecting from the base plate 15 and a hub 16A of the rotating plate 16. The taper roller bearing 17A includes an inner race 17B having a conical pitch face having its upper part of a small diameter, and an outer race 17C. In assembly, the inner race 17b is fitted to the outer periphery of the boss 15A, while the outer race 17C is fitted to the inner periphery of the hub 16A. In order to prevent the inner race 17B and the outer race 17C from slipping out, the bearing mechanism 17 further includes a fixing bolt 17D and a nut 17E. Between the base plate 15 and the rotating plate 16 around the bearing mechanism 17, a low-friction sheet 18 is arranged to reduce frictional resistance when the plate 15 makes contact with the plate 16. The rotating plate 16 and the seat 1 are rotatably supported on the base plate 15 owing to the bearing mechanism 17. When an offset load is applied from the seat 1, the rotating plate 16 comes into contact with the low-friction sheet 18 without contacting with base plate 15, accomplishing the smooth rotation. Owing to the constitution of the base plate 15, the rotating plate 16 rotatable by the bearing 17 and the low-friction sheet 18 between the plate 15 and the plate 16, the so-constructed rotating mechanism 5 is provided with a reduced vertical dimension. In the illustrated example, the rotating center of the rotating mechanism 5 is arranged so as to pass through the center part of the seat cushion 1A. Nevertheless, the rotating center of the rotating mechanism 5 is not always required to coincide with the center part of the seat cushion 1A and may be shifted to a margin part of the seat cushion 1A as an intended purpose demands.

For the purpose of suppressing the rotating plate 16 from oscillating in the vertical direction, an oscillation control unit 19 is arranged between the plate 16 and the base plate 15. As for this oscillation control unit 19, an arc guide opening 15B is formed in the front part of the base plate 15 so as to center the bearing mechanism 17. While, a hole 16B is formed in the front part of the rotating plate 16. The oscillation control unit 19 is formed by a bolt 19A consisting of a shaft part 19B and a head part 19C and a nut 19D. In assembly, the shaft part 19B of the bolt 19A is inserted into the guide opening 15B of the base plate 15 from its underside. Penetrating the rotating plate 16 through the hole 16B, the shaft part 19B of the bolt 19A is screwed into the nut 19D. In operation, when the rotating plate 16 oscillates apart from the base plate 15, the head part 19C of the bolt 19 abuts on the base plate 15, thereby restricting a further oscillation of the rotating plate 16. Again, the oscillation control unit 19 has an additional function to define the rotational range of the rotating plate 16 (and the seat 1) since the shaft part 19B of the bolt 19A can abut on both ends of the guide opening 15B. In the modification, the bolt 19A may be replaced with an element having an engagement part similar to the head part 19C although it is not shown in the figure.

On either side of the rear part of the rotating plate 16 (e.g. right side in the shown example), a bracket 20 having rising sides opposing each other is fixed to the plate 16. A support shaft 21 having both sides supported by the rising sides of the bracket 20 is arranged in the left-and-right direction of the vehicle. A lock lever 22 is provided with a pair of collars 23 fixed thereto. The collars 23 are rotatably engaged with the support shaft 21. Thus, the support shaft 21 supports the lock lever 22 rotatably about an axis extending in the left-and-right direction of the vehicle. The lock lever 22 is formed to extend forward along the lateral side of the seat 1 and also provided, at the tip of the lever 22, with a manipulating grip 22A. A coil spring 24 is arranged between the collars 23 and the support shaft 21 (or the bracket 20) to urge the lock lever 22 in a direction to rotate the grip 22A downward. The other end of the lock lever 22 is bent so as to penetrate a notch 25 of the rotating plate 16 and project downward, providing a lock pin 27 for engagement with lock grooves 26 of the base plate 15.

The lock grooves 26 of the base plate 15 are positioned so as to engage with the lock pin 27 of the lever 22 when the rotating seat 1 is in a neutral position, a retreat rotating position and a "passenger's getting on-and-off" position, respectively. The lock grooves 26 are formed in an circular margin 28 centering the bearing mechanism 17. Due to urging force of the coil spring 24, the lock pin 27 engages with a neutral lock groove 26A when the seat 1 is in the neutral position. When the seat 1 is in the retreat rotating position, the lock pin 27 engages with a retreat lock groove 26B. When the seat 1 is in the "passenger's getting on-and-off" position, the lock pin 27 engages with a "passenger's getting on-and-off" lock groove 26C. With these engagements of the lock pin 27, the seat 1 is prohibited from rotating freely. When the seat 1 is in the retreat rotating position, there is established one condition where the shaft part 19B of the bolt 19A abuts on one end of the guide opening 15B of the oscillation control unit 19. Further, when the seat 1 is in the "passenger's getting on-and-off" position, there is established another condition where the shaft part 19B of the bolt 19A abuts on the other end of the guide opening 15B of the oscillation control unit 19. The engagements of the lock pin 27 with the lock grooves 26A to 26C can be canceled by rotating the lock lever 22 in opposition to the coil spring 24 by means of the grip 22A. When the seat 1 is rotated for any length subsequently to the above rotation of the lock lever 22, the lock pin 27 of the lock lever 22 comes into contact with the circular margin 28, allowing the seat 1 to be rotated to an operator's intended position.

As shown in Fig. 3, an accelerator lever 10 (as an accelerator manipulating unit) is pivotally arranged in the vicinity of the grip 22A. The manipulation on the accelerator lever 10 is transmitted to a throttle lever 30 of an accelerator interlock 12 through an accelerator wire 11 in the form of a pull-cable or a push-pull cable. Together with a shaft 32, a pedal lever 33 is rotatably supported on a bracket 31. The accelerator pedal 7 allows this pedal lever 33 to be rotated corresponding to an operating span of the accelerator pedal 7 and also allows a throttle valve (not shown) of an engine to be opened or closed through a lever 34 fixed on the shaft 32 and a pull (or push-pull) wire 35. The throttle lever 30 is rotatably supported on the shaft 32 of the pedal lever 33. Since the throttle lever 30 is provided, at an intermediate part thereof, with a claw 30A for engagement with the other end of the pedal lever 33, the manipulation of the lever 33 allows the throttle valve of the engine to be operated. That is, according to . the embodiment, the throttle valve of the engine can be controlled by both of the accelerator pedal 7 and the accelerator pedal 10. Noted that although the accelerator lever 10 forms the accelerator manipulating unit in the above description, it may be formed by a rotary-type manipulator to rotate the grip 22A or a joy-stick type manipulator both not shown in the figure. Further, as for the grip(rotary)-type manipulator or the joy-stick type manipulator, an operating span thereon may be converted to electrical signals to drive a not-shown motor etc. for actuating the accelerator interlock 12 mechanically.

As shown in Figs. 7 and 8, the accelerator interlock 12 includes a vacuum actuator 36 having a rod 38. When the vacuum actuator 36 is in an inactivated state, the rod 38 is urged by a built-in spring 37 to occupy its forward position. When the vacuum actuator 36 is activated, the rod 38 is moved to its backward position in opposition to the built-in spring 37. In the forward position, the rod 38 intersects with a rotational track of the throttle lever 30 to engage with a hole 31A formed in the bracket 31, thereby preventing the throttle lever 30 from moving in a direction to open the throttle valve. The vacuum actuator 36 is driven by negative pressure supplied from a vacuum switching valve 39.

The vacuum switching valve 39 includes an output port 39A communicating with the actuator 36, an atmospheric port 39B communicating with atmospheric air and a vacuum port 39C communicating with an intake manifold of the engine. When a solenoid 40 is inactivated, the atmospheric port 39B communicates with the output port 39A, so that the actuator 36 is brought into the inactivated state. When the solenoid 40 is activated, the vacuum port 39C communicates with the output port 39A, so that the actuator 36 is brought into the activated state. The solenoid 40 is connected with a battery 44 through the intermediary of a seat-rotating detecting switch 43, a fuse 42 and a key switch 41. The seat-rotating detecting switch 43 is turned on when the seat 1 is positioned in the retreat rotating position. The solenoid 40 is activated providing that the key switch 41 is turned on and the seat-rotating detecting switch 43 detects the seat 1 in the retreat rotating position. Then, the actuator 36 causes the rod 38 to be withdrawn to allow the rotation of the throttle lever 30, thereby allowing the opening/closing action of the throttle valve by means of the accelerator lever 10.

The above-constructed seat apparatus for an industrial vehicle operates as follows.

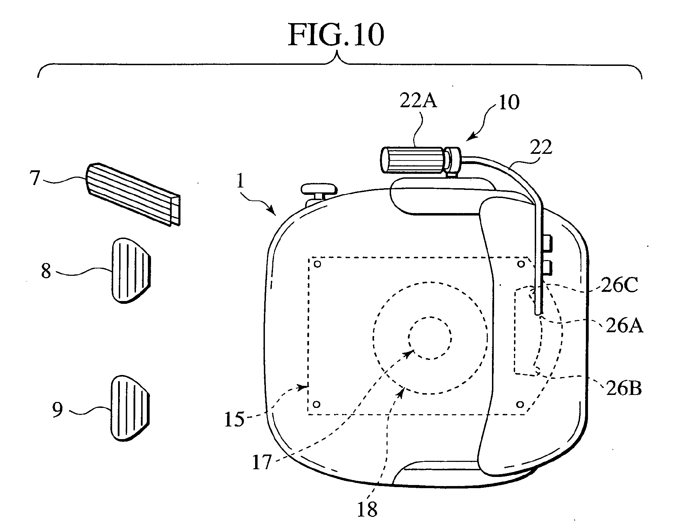

In the neutral state of the seat 1, as shown in Figs. 9 and 10, the lock pin 27 of the lock lever 22 engages in the neutral lock groove 26A to lock the rotating mechanism 5, so that an operator takes a seat in the normal posture directing ahead of the vehicle. Accordingly, the operator can manipulate the accelerator pedal 7, the brake pedal 8, the inching pedal 9, etc. to travel the vehicle, as usual. Then, the seat-rotating detecting switch 43 is in OFF state and both of the vacuum switching valve 39 and the actuator 36 are together turned off. Thus, the rod 38 occupies its projecting position to obstruct the action of the throttle lever 30, thereby establishing a condition disenabling manipulating the throttle valve despite an operator's manipulation of the accelerator lever 10.

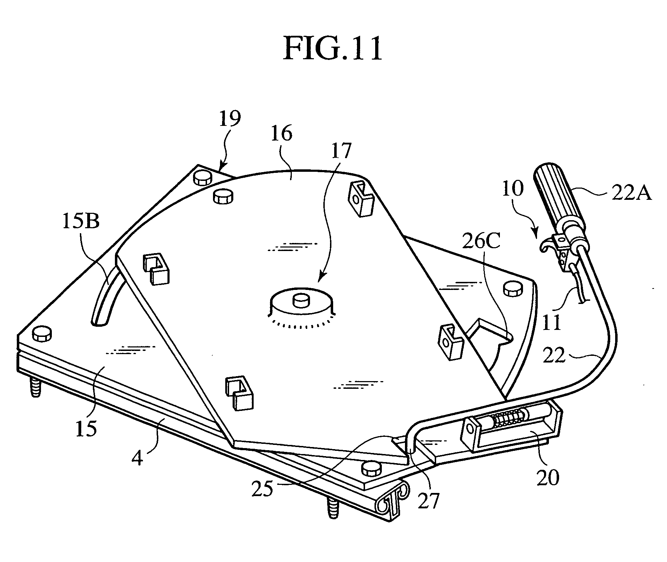

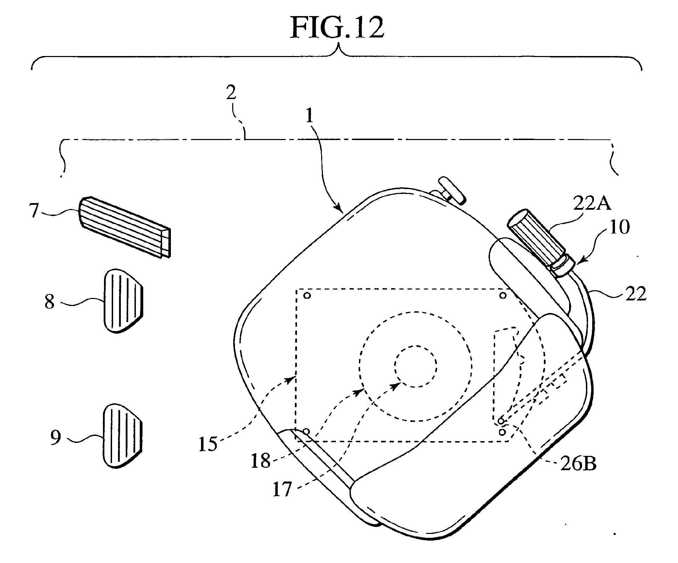

In case of manipulating the seat 1 from the above state to the retreat rotating position for reverse travel of the vehicle, as shown in Figs. 11 and 12, an operator pulls up the lock lever 22 by an operator's right hand. Then, the lock lever 22 rotates about the support shaft 21, so that the lock pin 27 disengages from the neutral lock groove 26A and abuts on the bottom of the notch 25 in the rotating plate 16, whereby the lock lever 22 is prevented from further rotating.

Successively, when an operator twists an operator's body to the right (in this case), the seat 1 rotates around the taper roller bearing 17A of the rotating mechanism 5 as the rotating center, smoothly. In this state, since the lock pin 27 bears on the circular margin 28 with the rotation of the seat 1, it can rotate even if stopping the pulling action of the lock lever 22. Here, we describe a case of rotating the seat 1 while keeping on pulling up the lock lever 22. With the rotation of the seat 1, the bolt 19A of the oscillation control unit 19 abuts on the end of the guide opening 15B to obstruct a further rotation of the seat 1, while the lock pin 27 faces the retreat lock groove 26B. When stopping pulling up the lock lever 22 in the above state, the lock lever 22 rotates about the support shaft 21 by the coil spring 24 and the lock pin 27 engages in the retreat lock groove 26B thereby locking the seat 1 in the retreat rotating position. If rotating the seat 1 while stopping pulling up the lock lever 22, the lock pin 27 engages in the retreat lock groove 26B at the same time of facing it.

The engagement between the lock pin 27 and the retreat lock groove 26b causes the seat-rotating detecting switch 43 to be turned on. As a result, the solenoid 40 of the vacuum switching valve 39 is activated to communicate the vacuum port 39C with the output port 39A, so that the vacuum actuator 36 is supplied with negative pressure of an intake manifold of an engine. Then, the vacuum actuator 36 moves the rod 38 back in opposition to the built-in spring 37, allowing rotation of the throttle lever 30. Therefore, when an operator manipulates the accelerator lever 10, the movement is transmitted to the throttle lever of the engine through the accelerator wire 11, the throttle lever 30, the claw 30A, the pedal lever 33, the shaft 32, the lever 34, etc., thereby allowing a vehicle speed etc. to be controlled.

In this state, as shown in Fig. 12, since an operator makes an angle of 40 to 45 degrees with the forward traveling direction of the vehicle, an operator can identify obstacles etc. existing in the backward traveling direction without twisting an operator's body greatly. On the other hand, an operator's left foot approaches the brake pedal 8 to enable maintaining to manipulate it, while an operator's right foot leaves the accelerator pedal 7 greatly to disenable manipulating it. However, owing to the provision of the lock lever 22 accompanied with the accelerator lever 10, the operator can control a traveling speed of the vehicle by means of the accelerator lever 10 while identifying the backside of the vehicle.

In order to return the seat 1 into the neutral state, it is performed to lower the lock lever 22 to make the lock pin 27 apart from the retreat lock groove 26B and twist an operator's body to a neutral direction (left). Then, the operator releases an operator's hand from the lock lever 22 when the seat 1 begins to rotate. With a further rotation of the seat 1, it rotates up to its straight state. When the lock pin 27 faces the neutral lock groove 26A, an urging force of the coil spring 24 allows the lock pin 27 to engage in the neutral lock groove 26A under lock automatically. As soon as the lock lever 22 is pulled up, the seat-rotating switch 43 is inactivated. Then, the excitation of the solenoid 40 is canceled to release the operation of the vacuum actuator 36, so that the rod 38 goes ahead to obstruct the action of the throttle lever 30. That is, in the neutral state of the seat 1, it becomes possible to control the throttle valve by means of the accelerator pedal 7 only, thereby preventing wrong operation of an operator. In case of continuing the pulling-up operation of the lock lever 33 even after the rotation of the seat 1, an operator has only to stop the pulling-up operation of the lock lever 22 after confirming the recovery of the seat 1 to the neutral state. Then, it is checked whether the seat 1 is in the neutral state or not. For example, if a detent mechanism is built in the rotating mechanism 5, then it is possible to attain accurate operation of the lock lever 22.

In order to change the seat 1 from the neutral state to the "passenger's getting on-and-off" position, it is performed to pull up the lock lever 22 to make the lock pin 27 apart from the neutral lock groove 26A and twist an operator's body toward the "passenger's getting on-and-off" position. As a result, the seat 1 rotates about the taper roller bearing 17A of the rotating mechanism 5 smoothly. Since the lock pin 27 faces the circular margin 28 with the rotation of the seat 1, it can rotate in this state even if stopping the pulling-up operation of the lock lever 22. Here, we describe a case of rotating the seat 1 while keeping on pulling up the lock lever 22. With the rotation of the seat 1, the bolt 19A of the oscillation control unit 19 abuts on the other end of the guide opening 15B to obstruct a further rotation of the seat 1, while the lock pin 27 faces the "passenger's getting on-and-off" lock groove 26C. When stopping pulling up the lock lever 22 in the above state, the lock lever 22 rotates about the support shaft 21 by the coil spring 24 and the lock pin 27 engages in the "passenger's getting on-and-off" lock groove 26C thereby locking the seat 1 in the "passenger's getting on-and-off" rotating position. If rotating the seat 1 while stopping pulling up the lock lever 22, the lock pin 27 engages in the "passenger's getting on-and-off" lock groove 26C at the same time when the lock pin 27 faces the groove 26C.

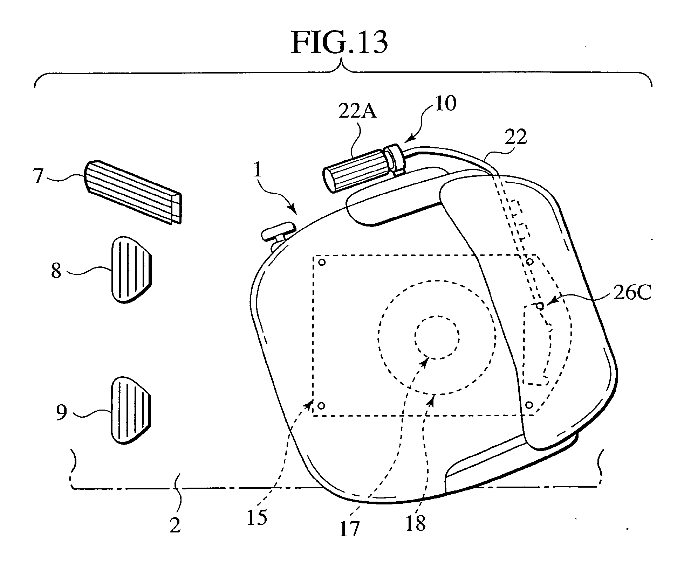

As shown in Fig. 13, the "passenger's getting on-and-off" rotating position is mainly utilized in getting on-and-off the vehicle, forming a seat-rotating position facilitating an operator's getting on-and-off the vehicle. Then, in the accelerator interlock 12, the actuator 36 is so inactivated that the rod 38 occupies the forward position to obstruct rotating of the throttle lever 30, disenabling manipulating of the accelerator lever 10. In case of traveling the vehicle for any reason, since the pedals are not apart from the seat 1 so much, an operator can manipulate the accelerator pedal 7 by an operator's right foot and also the brake pedal 8 and the inching pedal 9 by an operator's left foot, allowing traveling of the vehicle.

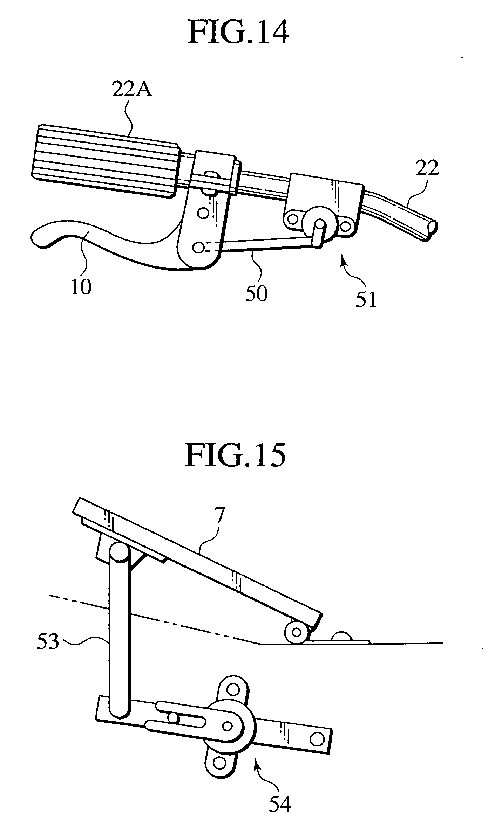

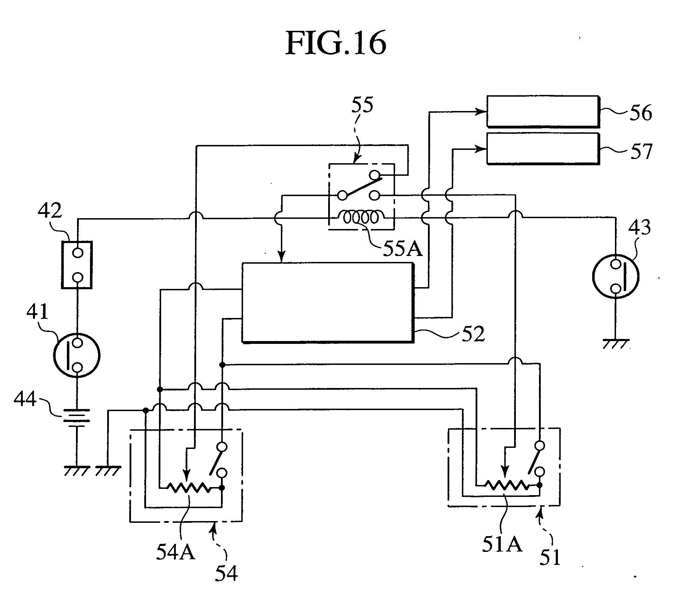

Figs. 14 to 16 show a modification of the seat apparatus for an industrial vehicle of the present invention. In the modification, the above-mentioned mechanical accelerator interlock is replaced with an electrical accelerator interlock. Fig. 14 shows the structure in the circumference of an accelerator lever, while Fig. 15 shows the structure in the circumference of an accelerator pedal. Fig. 16 shows the structure of an electrical circuit.

In Fig. 14, a manipulation amount about the accelerator lever 10 is inputted to a rotary encoder 51 through a rod 50. Then, the rotary encoder 51 converts the manipulating amount about the accelerator lever 10 to an electric signal and further outputs the signal to a controller 52.

In Fig. 15, a manipulation amount about the accelerator pedal 7 is inputted to a rotary encoder 54 through a rod 53. Then, the rotary encoder 54 converts the manipulating amount about the accelerator pedal 7 to an electric signal and further outputs the signal to the controller 52.

The rotary encoder 51 for the accelerator lever 10 is connected with the rotary encoder 54 for the accelerator pedal 7, as shown in Fig. 16. The encoders 51, 54 include variable resistances 51A, 54A to which voltages are applied from the controller 52, respectively. Output voltages from the variable resistances 51A, 54A are respectively inputted to a switching relay 55. The switching relay 55 outputs an output of the rotary encoder 54, which corresponds to the manipulating amount of the accelerator pedal 7, to the controller 52 when a built-in solenoid 55A is not excited. While, when the solenoid 55A is excited, the switching relay 55 outputs an output of the rotary encoder 51, which corresponds to the manipulating amount of the accelerator lever 10, to the controller 52. The solenoid 55A of the switching relay 55 is connected to the seat-rotating switch 43 and therefore, the relay 55 is activated when the switch 43 operates. When the seat-rotating switch 43 is turned off, a signal corresponding to a manipulating amount of the accelerator pedal 7 is inputted to the controller 52. While, when the seat-rotating switch 43 is turned on, a signal corresponding to a manipulating amount of the accelerator lever 10 is inputted to the controller 52. Then, the controller 52 operates a traveling motor 56 or a brake 57 corresponding to the above signals, thereby controlling the traveling condition of the vehicle.

Also in this modification, since the switching relay 55 generates a signal corresponding to the manipulating amount of the accelerator lever 10 to the controller 52 when the seat-rotating switch 43 detects the seat 1 being rotated to the backward traveling position, an operator can manipulate the accelerator lever 10 on the lock lever 22 while identifying obstacles etc. existing in the backward traveling direction without collapsing an operator's driving posture, thereby allowing a vehicle's traveling condition to be controlled corresponding to an operator's manipulation.

Since the switching relay 55 generates a signal corresponding to the manipulating amount of the accelerator pedal 7 to the controller 52 when it is detected due to the inactivation of the seat-rotating switch 43 that the seat 1 is in the neutral rotating position or the "passenger's getting on-and-off" rotating position, an operator can control a vehicle's traveling condition corresponding to an operator's manipulation on the accelerator pedal 7 while identifying obstacles etc. existing in the forward traveling direction.

According to the embodiment of the invention, it is possible to bring about the following effects.

First, the seat 1 is equipped, in place of the accelerator pedal 7, with the accelerator lever 10 (as the accelerator manipulating unit) allowing a vehicle traveling unit to be controlled manually. Therefore, even when an operator is getting on the seat 1, the operator can control the vehicle traveling unit by the accelerator lever 10 manually, allowing a rotating angle of the seat 1 to be increased without taking operationality about the accelerator pedal 7 into consideration. Thus, it is possible to rotate the seat 1 up to an ideal angle required to ensure field of vision at a vehicle's backward traveling, whereby an operator's fatigue due to a strained driving posture can be reduced remarkably.

Since the rotating mechanism 5 is formed by the bearing 17 that supports the rotating plate 16 to the base plate 15 rotatably and the low-friction sheet 18 disposed between the base plate 15 and the rotating plate 16 through a clearance while surrounding the bearing 17, the rotating mechanism 5 can be thinned as a whole, whereby it is possible to suppress raising of a hip point about the seat 1 to the utmost. A load applied on the seat 1 is mostly born by the bearing 17, while the low-friction sheet 18 bears the load only when the rotating plate 16 is bent. Therefore, the seat 1 can be rotated by only twisting an operator's body slightly, thereby requiring no motive energy to rotate the seat 1.

Since an oscillation of the rotating plate 16 allowing it to apart from the base plate 15 is restricted by the oscillation control unit 19, even if the seat back 1B is subjected to a great input at breaking etc., it is possible to prevent the rotating plate 16 from lifting, thereby preventing a change in posture of an operator on the seat 1.

The position of the rotating plate 16 in relation to the base plate 15 can be altered at least between the neutral position and the retreat rotating position and also locked up in each of the neutral position and the retreat rotating position. Furthermore, the lock lever 22 for releasing these locking states is equipped with the accelerator lever 10 as the accelerator manipulating unit. Therefore, it is possible for an operator to manipulate the accelerator lever 10 while gripping the lock lever 22 after the rotation of the seat 1 has been completed, whereby a smooth shifting to the backward traveling can be accomplished, thereby improving the operating efficiency of an operator. Additionally, if allowing the releasing direction of the lock lever 22 to coincide with the rotating direction of the seat 1, then an operator's twisting direction to rotate the seat 1 coincides with the manipulating direction of the lock lever 22, thereby facilitating rotating of the seat 1 furthermore.

The position of the rotating plate 16 can be altered to the "passenger's getting on-and-off" rotating position on the opposite side of the retreat rotating position over the neutral position and also locked up in the "passenger's getting on-and-off" rotating position. Therefore, when the rotating plate 16 is in the "passenger's getting on-and-off" rotating position, the seat 1 faces in the "passenger's getting on-and-off" direction, whereby the passenger's boarding and alighting capability can be improved remarkably. Particularly, the seat apparatus of the embodiment is effective for the latest mainstream hip-support seat for holding an operator.

Since the rotating mechanism 5 is disposed between the seat slide mechanism 4 and the seat 1, the relationship between a hip point of the seat 1 and its rotating center is usually fixed irrespective of the sliding position of the seat 1, thereby producing no operator's sense of discomfort in rotating the seat 1 and also producing a constant power necessary for an operator to rotate the seat 1.

Since the seat apparatus of the embodiment enables an operator to manually operate the vehicle traveling unit by means of the accelerator lever 10 as the accelerator manipulating unit when the seat 1 is positioned in the retreat rotating position, it is possible to prevent an operator's wrong operation at a vehicle's forward movement etc., thereby improving safety.

According to the embodiment of Figs. 1 to 13, since the seat apparatus is constructed so that an operator can control the traveling of an industrial vehicle with a throttle valve for drive control by means of the accelerator lever 10 (as the accelerator manipulating unit) communicated with the throttle valve through an accelerator wire 11, the seat apparatus is suitable for an industrial vehicle, such as fork lift equipped with an engine, and is available at a popular price.

According to the modification of Figs. 14 to 16, for an industrial vehicle equipped with at least the electric motor 56 to be controlled by the controller 52, since the seat apparatus is adapted so as to generate a signal corresponding to an operator's manipulating amount for accelerator lever 10 (as the accelerator manipulating unit) to the controller 52. Accordingly, the seat apparatus of the modification is suitable for an electrically-operated industrial vehicle, such as battery-type fork lift. Furthermore, the seat apparatus is available at a popular price and also easy in layout.

Japanese Patent Application No. 2002-155202 is incorporated herein by reference in its entirety.

The scope of the invention is defined with reference to the following claims.

## Claims

1. A seat apparatus for an industrial vehicle, the seat apparatus comprising:
an accelerator pedal (7) for controlling a vehicle traveling unit;
a seat (1) rotatably supported on a vehicle body through a rotating mechanism (5), for controlling a rotating position of the seat (1) in relation to the vehicle body; and
an accelerator manipulating unit (10) arranged about the seat (1), for operating the vehicle traveling unit manually in place of the accelerator pedal (7).

2. The seat apparatus of claim 1, further comprising a base plate (15) connected to the vehicle body and a rotating plate (16) connected to the seat (1), wherein the rotating mechanism (5) includes:
a bearing (17) that supports the rotating plate (16) on the base plate (15) rotatably; and
a low-friction sheet (18) arranged between the base plate (15) and the rotating plate (16) through a clearance so as to surround the bearing (17).

3. The seat apparatus of claim 2, wherein the rotating plate (16) is adapted to suppress its oscillation in a direction apart from the base plate (15).

4. The seat apparatus of claim 2 or 3, wherein the rotating plate (16) is adapted to enable change of its rotating position to at least both of a neutral position to direct the seat (1) in front and a retreat rotating position used at a vehicle's moving back and also adapted so that the rotational movement of the rotating plate (16) can be locked on the neutral position and the retreat rotating position, and the accelerator manipulating unit (10) is arranged on a lock lever (22) provided on either the rotating plate (16) or the seat (1), for releasing the locking state of the rotating plate (16).

5. The seat apparatus of claim 4, wherein the rotating plate (16) is allowed to change its rotating position to a passenger's getting on-and-off rotating position on the opposite side of the retreat rotating position over the neutral position, the rotating plate can be locked its rotational movement on the passenger's getting on-and-off rotating position.

6. The seat apparatus of any one of claims 1 to 5, further comprising a seat slide mechanism (4) arranged on the vehicle body to slide the seat (1), the rotating mechanism (5) arranged between the seat slide mechanism (4) and the seat (1).

7. The seat apparatus of any one of claims 1 to 5, wherein an operator's manual operation of the vehicle traveling unit with the accelerator manipulating unit (10) is permitted when the seat (1) is in the retreat rotating position used at a vehicle's moving back.

8. The seat apparatus of any one of claims 1 to 5, wherein the vehicle traveling unit is adapted to control a vehicle's traveling by operating a throttle valve of an engine, and the accelerator manipulating unit (10) is adapted to operate an accelerator wire connected to the throttle valve.

9. The seat apparatus of any one of claims 1 to 5, wherein the vehicle traveling unit is adapted to control a vehicle's traveling by controlling at least the drive of an electrically-powered motor through a controller, and the accelerator manipulating unit (10) is adapted to generate a signal corresponding to an operator's manipulating amount to the controller.
